# EUROPEAN PATENT SPECIFICATION

(11) **EP 4 585 514 B1**
(45) Date of publication and mention of the grant of the patent: **14.10.2026**
(21) Application number: 24461502.7
(22) Date of filing: 09.01.2024
(51) Int. Cl.: B64D 11/06, A47C 7/68, B60N 3/10, B60N 3/00

(54) **FOLDABLE TABLE SYSTEM**
KLAPPTISCHSYSTEM
SYSTÈME DE TABLE PLIABLE

(43) Date of publication of application: 16.07.2025
(73) Proprietor: B/E Aerospace Fischer GmbH, 84034 Landshut (DE)
(72) Inventor: KOLODZIEJCZAK, Marcin Szymon, 51-317 Wroc aw (PL)
(74) Representative: Dehns

(56) References cited:
- CN-A- 110 422 095
- CN-A- 116 945 993
- CN-U- 204 077 437
- CN-Y- 200 971 062
- JP-A- H08 169 267
- US-A1- 2006 261 644
- US-A1- 2010 326 332

## Description

### TECHNICAL FIELD

This disclosure relates to a foldable table system mounted in a seat back e.g. a seat in a vehicle or aircraft e.g. airplane or helicopter.

### BACKGROUND

In various settings, such as, but not only, in vehicles or aircraft, tables may be mounted to seats or provided in seat areas for use. The tables are mounted such that they can be folded out for use or folded back to be stowed in a part of the seat structure when not in use. Such tables are particularly useful when, for example, space is restricted and/or where, for reasons of safety, convenience or comfort, the table should not always be in the opened-out state. It is known, for example, to have foldable tables or surfaces mounted in seat arms or seat backs in passenger vehicles or aircraft. In some cases, the table is mounted to the back of a seat back rest such that a passenger in a seat behind the seat in which the table is mounted, can access and fold out the table from the back of the back rest in front of them. In other systems, the table can be stowed in a recess in a seat arm rest and folded out over the lap of the user of the seat when needed. In other systems, the table may be mounted in and stowed in the front of the seat back against which the back of a person in the seat would usually rest. With these systems, the bottom surface of the table (with reference to its opened out state) is provided with cushioning so that when the table is stowed, the seat back appears and functions as a regular seat back. If, however, the seat is not in use, the table can be folded out so that the seat provides, instead, a table area e.g. for a person in an adjacent seat or just to make use of the vacant seat to provide a useful table surface. Such tables are often provided in helicopters where space is restricted and where a pilot or passenger may need a useful table surface rather than a spare seat. Such systems can also be used in aircraft e.g. in Business or first class seats, where passengers are often given a seat with an adjacent seat next to them being kept vacant to provide the passenger with more space and privacy. In such cases, the vacant seat can then provide a table for that passenger.

These table systems are also often provided with cup or beverage holders in the form of holes or receptacles. These may be formed in the table itself, or may be attached to and foldable from the table.

In all such table systems, it is desirable that, at least in the stowed state, the table is locked in place. This is especially important in high vibrational environments such as in vehicles or aircraft. Often, the table is secured in the stowed position by a simple latch extending between the seat back and the table that can be opened by simple rotation by a user. Where the table is in the front of the seat back, and is provided with cushioning, often the seat is just held in place by friction and due to gravity and the slightly inclined angle of the seat.

Foldable table systems are disclosed in CN 116 945 993 A and JP H08 169267.

While such table systems have generally proved fit for purpose, there is always a desire to improve the systems in terms of their ease and safety of use, space saving design, and secure stowing. There is also a desire, especially in high motion or vibrational uses, to ensure that the table is locked in its closed position and preferably also in its open position. Where the back of the table is provided with cushioning to provide a seat back when stowed, the cushioning can also interfere with the table opening to a flat orientation, and there is a desire to mitigate this.

### SUMMARY

According to this disclosure, there is provided a foldable table system as defined by claim 1.

Also provided is a seat incorporating such a table assembly.

### BRIEF DESCRIPTION

Examples of the table system will now be described with reference to the drawings. It should be noted that these are examples only and variations are possible within the scope of the claims.
Figure 1 shows a seat with a foldable table according to this disclosure installed and in an open position.
Figure 2 shows the example of Fig. 1 but with the table in the stowed position.
Figure 3 shows the example of Figs. 2 and 3 viewed from the rea of the seat.
Figure 4 shows an example of a table according to the disclosure.
Figure 5 shows a detail of a seat with installed table.
Figure 6 shows an interior of a table according to the disclosure.
Figure 7 shows a detail of Fig. 6.

### DETAILED DESCRIPTION

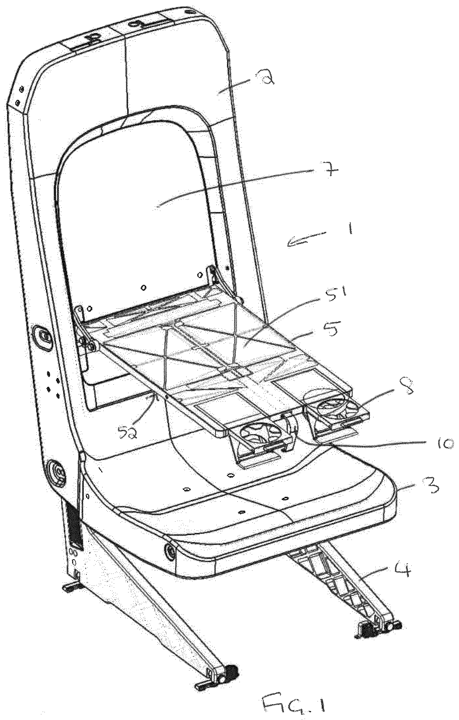

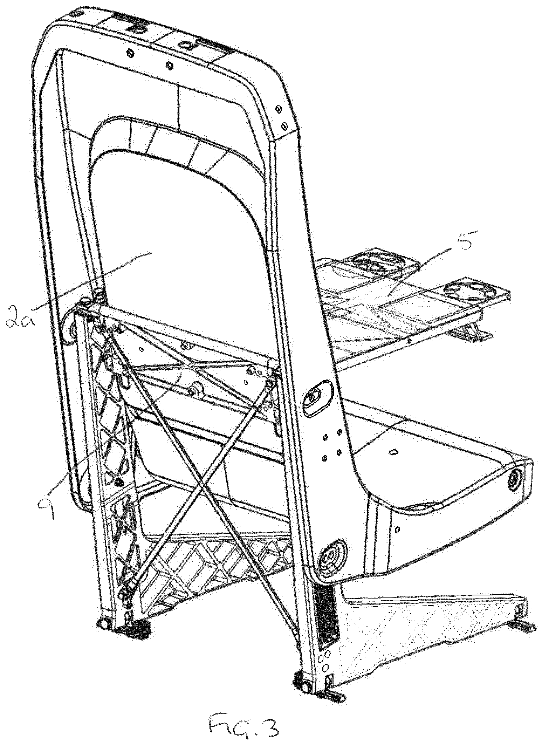

With reference to Figs. 1, 2 and 3, the table system according to this disclosure is mounted to a seat back 3 of a seat 1. The seat also has a seat base or seat pan 3. In the example shown, the seat is provided with mounting feet 4 to allow the seat to be mounted to e.g. floor tracks in a vehicle or aircraft. The table assembly is not, however, limited to use in such seats and can be incorporated into other types of seat for other environments.

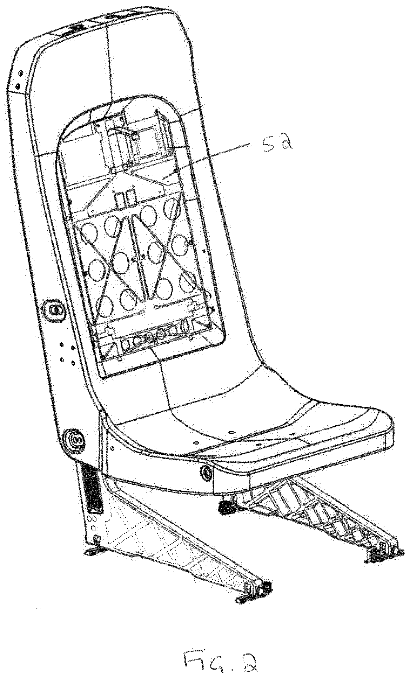

The table system comprises a table 5 which is mounted by a hinge assembly 6, to be described in more detail below, to the seat back 2 such that the table can be pivoted about the hinge assembly 6 between a closed position (Fig. 2) where the table 5 is positioned with its table top surface 51 against the seat back 2 and its bottom surface 52 facing outwards towards the user when seated, and an open position (Fig. 1). The table bottom surface 52 may be provided with cushioning to provide a comfortable back rest when the table is closed/stowed.

To improved the continuity of the seat back when the table is stowed, a recess 7 may be formed in the seat back to accommodate the table when stowed.

The table may also optionally be provided with accessories such as one or more cup holders 8. These can be fitted into slots or rails to slide out from the table when in use and slide back inside the table when not in use, or they can be foldable relative to the table. Alternatively, the top of the table can be provided with cut-outs or recesses to hold cups or drinks. Cup holders are, however, not necessarily provided with the table.

To secure the table in position when stored and, optionally when in the folded out position, a locking system 10 is provided which is largely formed inside the table between its table top surface 51 and its bottom surface. This will be described further below.

To provide additional securing of the table to the seat and reinforcement, the table may be mounted to a reinforcement plate 9 provided at the rear 2a of the seat back 2.

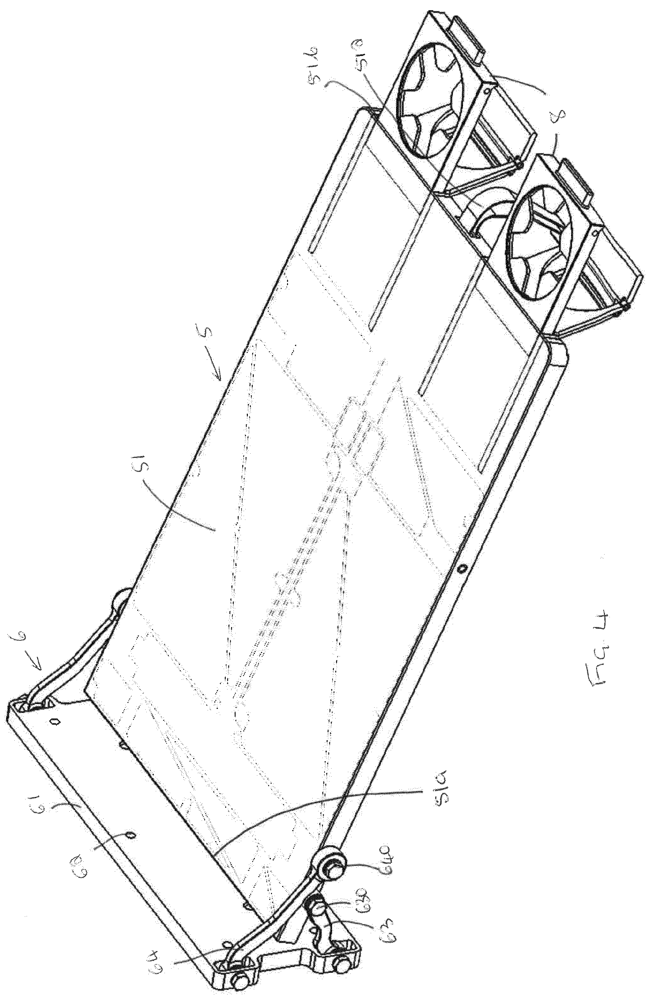

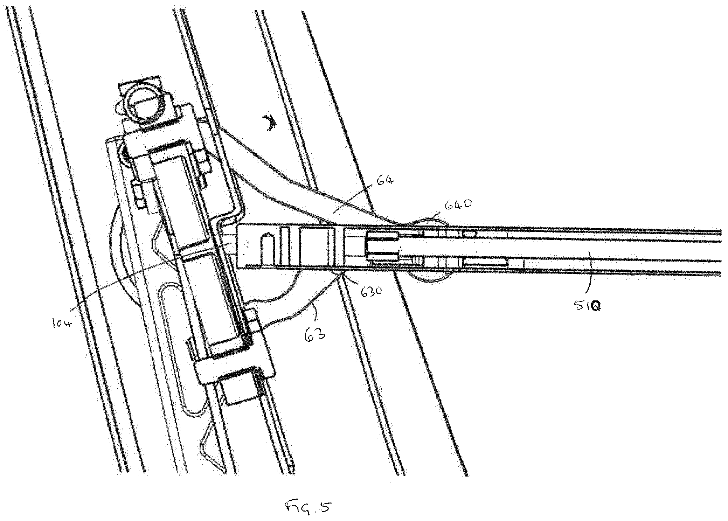

The table is shown in more detail in Fig. 4. This shows the table in the open position showing the table top surface 51 extending from a first end 51a adjacent the hinge assembly 6, to a second, opposite end 51b. In the example shown, the cup holders 8 extend from this free second end 51b, but these are an optional feature. The table top surface 51 and the table bottom surface 52 define between then a receptacle (510 in Fig. 5) to accommodate the locking system 10 described further below.

The hinge assembly 6 comprises a hinge plate 61 that is arranged to be secured to the seat back 2 e.g. by screws or bolts or other fasteners 62. For a stronger system, the fasteners 62 may pass through the seat back to secure with a reinforcement plate 9 at the rear of the seat.

The hinge assembly may be designed such that there is no fixed pivot point about which the table 5 pivots. Rather, the hinge defines a pivot curve or radius created from multiple instant pivot points. The table can then fold out by first pivoting at a first pivot point and then pivoting about a second pivot point so that the folding table first lifts to clear the cushioning on the table bottom surface before folding out in the opening flat direction. This way, the cushioning does not affect the ease of opening the table to a properly flat position. In the example shown, the moving pivot point is provided by the use of two hinge arms 63, 64 on each side of the table. The first hinge arm 63 is connected to a side of the table at a first pivot point 630 and the second arm 64 is connected to the side of the table at a second pivot point 640. To open the table, the table is first moved in a first direction which is an upward direction relative to the hinge back plate about the second pivot point 640, defining a pivot curve or radius rather than just a single fixed pivot point, to clear or lift above where the cushion is present where the table pivots, and then pivots to the open position about the higher, first pivot point 630. With the multiple pivot points, defining a pivot curve, the whole top surface of the table is then available for use when the table is open.

The locking system 10, which is built into the table, is configured to lock the table in position relative to the seat back and hinge plate when in the closed or stowed position and also to lock the table in its flat, opened out position, relative to the hinge plate, but to allow free movement of the table between those two positions.

The locking system 10 comprises two side locking pins 102, one extending from each side of the table at a position intermediate the two ends of the table, and two rear locking pins 104 at the first end of the table. It is also conceivable that the system has more than two side locking pins and/or more than two rear locking pins 104.

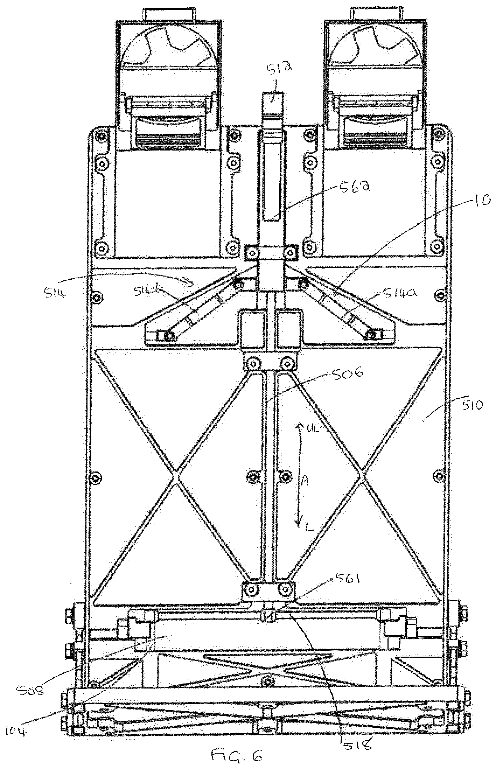

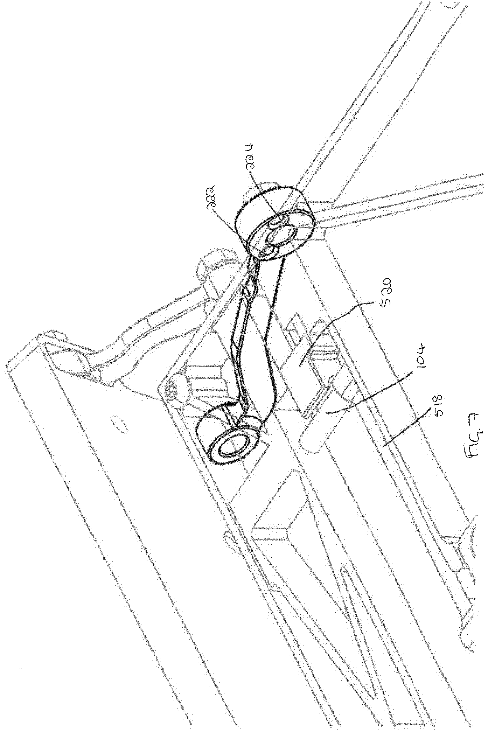

The locking system comprises an assembly of levers that can best be seen and explained with reference to Figs. 6 and 7, which show the interior cavity 510 of the table (i.e. with the top surface 51 removed from the drawings for ease of explanation). The assembly of levers includes a central rod 506 that extends along a centreline of the table between the first and second ends. The rod 506 is attached, at a first end 561, to a rear locking mechanism 508 associated with the rear locking pins, and at a second end 562 to an actuator 512 to be operated by a user when opening the table. In this example, the actuator is a tab 512 or strap which may extend from the second end of the table to be grasped by the user for easy manipulation of the locking system. Intermediate the first and the second end or the rod 506, the rod is connected to a side locking mechanism 514 associated with the side locking pins 102.

The side locking mechanism 514 comprises two side levers 514a, 514b each extending out from the rod 506 towards a respective side of the table and pivotally attached to the rod, at one end, at attached to a respective one of the side locking pins at the other end.

The rear locking mechanism 508 comprises a rear rod 518 joined to the center rod 506 and extending out towards the sides of the table where each end of the rear rod is attached to a respective rear locking pin 104.

Operation of the locking mechanism will now be explained in more detail with reference to the examples shown.

When the table is stowed, the locking system is biased to its locked position in which the side locking mechanism causes the side locking pins 102 to extend from the sides of the table and engage in corresponding recesses or detents in the seat back and the rear locking pins extend through the hinge plate 61 into corresponding recesses or detents in the seat back. With reference to arrow A in Fig. 6, the rod would by biased in direction L for the side and rear locking pins to be locked relative to the seat back.

To release the locking system so that the table can be folded out to the open position, the user operates the locking system via the actuator - i.e., in the example, by pulling the tab 512 in a direction away from the second end of the table - i.e. in direction UL (arrow A). The tab preferably protrudes from the table and the rest of the seat back when the table is stowed, and may be in a colour that is different from the seat cushioning, so that the user can easily see and grasp the tab. By pulling the tab, the locking system central rod 506 is also pulled in direction UL. As the central rod moves in the UL direction, it draws end of the side levers connected to the central rod up in the same, UL direction. These side levers thus pivot about their respective pivot points thus drawing the side locking pins 102, attached to their other ends, inwards into the table cavity and out of engagement with the recesses/detents in the seat back to unlock the table from the seat back at this point. At the same time, the central rod pulls the rear rod 518 in the UL direction which, in turn, pulls the rear locking pins 104 out of the corresponding recesses/detents in the seat back. The table is then released relative to the seat back to be folded out about the hinge assembly 6, first b an upward movement and then in an opening out movement until the flat open position such as shown in Fig. 1 is reached.

When the user releases the tab, the central rod 506 returns to its default position in direction L (arrow A). The side levers 514a, 514b then pivot back to their extended position pushing the side locking pins 102 to extend from the sides of the table 5. Provided the table is not stowed in the seat back, there is nothing for these pins 102 to engage with and so they do not function to prevent any movement of the table when out of the stowed position. The rear pins 104, when the central rod is in its default state, will extend in the L direction but will only lock when the table is in the fully opened out position, as described further with reference to Fig. 7. Once the table is fully opened, the rear locking pins 104 will engage in holes in the back of the seat back or in the reinforcement plate, if present.

A spring-loaded mechanism (Fig. 7) may be provided to ensure that the rear locking system is not actuated during movement of the table between the stowed and the open position. The spring-loaded mechanism comprises a spring-loaded pin 520 located between each end of the rear rod 518 and the second hinge arm pivot point. The second hinge arm 64 is provided with two holes 222, 224 spaced around the pivot point of the second arm 64 such that the holes align with the pins only when the table is at the stowed position and at the open position. At all intermediate positions, the spring-loaded pins are biased inwards towards the rear pins 104. Therefore, at all positions of the table between the stowed and the open position, the spring-loaded pins are biased against the respective end of the rear rod which prevents the rear pins engaging in the recesses/detents. In the stowed and open positions, however, the locking mechanism is actuated and the rear rod 518 pushes the spring-loaded pins outwards where they engage in the holes 522, 524 in the arm. When a user pulls the actuator 512 to unlock the assembly, moving the assembly in the UL direction, the spring-loaded pins 520 are decompressed by their springs and are no longer actuated into the holes in the arms.

The locking system therefore prevents undesired self-opening of the table and also reduces vibration of the table when it is in its open position. The table system is simple, lightweight and compact but also rigid and secure and remains stable in all positions. After closing, the table can lie completely flat in the seat back to provide a comfortable and unobtrusive back rest.

## Claims

1. A foldable table system for incorporation in a seat back, the system comprising:
a table (5) having a first end (51a) and a second end (51b), a table top surface (51) extending from the first end to the second end, a table bottom surface (52) extending from the first end to the second end, and a cavity (510) defined between the table top surface and the bottom surface;
a hinge assembly (6) connected by pivot arms (63, 64) to the first end of the table about which the table is pivoted between a stowed position and an open position; and
a locking system (10) located within the cavity, the locking system comprising a lever assembly, side locking pins (102) connected to a side locking assembly of the lever assembly, rear locking pins (104) connected to a rear locking assembly of the lever assembly, and an actuator (512) for operation by a user, wherein the locking system is biased to a default state in which the lever assembly drives the side locking pins and the rear locking pins to extend from the table, and wherein operation of the actuator by the user operates the lever assembly to retract the side locking pins and the rear locking pins into the cavity; and **characterised in that**:
the lever assembly comprises a central rod (506) extending along a centreline of the table between the first end and the second end, the central rod being attached, at a first end, to a rear locking mechanism (508) comprising the rear locking pins, and at a second end to the actuator (512).

2. The system of claim 1, wherein the hinge assembly (6) is arranged to define a pivot curve or radius defined by multiple pivot points, to cause the table to open in a pivot curve when the user operates the actuator.

3. The system of claim 1 or 2, wherein the locking system comprises a hinge plate (61) arranged to be secured to the seat back.

4. The system of claim 3, further comprising a reinforcement plate (9) arranged to be fastened to the hinge plate, in use, with the seat back between the hinge plate and the reinforcement plate.

5. The system of any preceding claim, wherein the locking system comprises two side locking pins, one at each side of the table.

6. The system of any preceding claim, wherein the locking system comprises two rear locking pins extending from the first end of the table.

7. The system of any preceding claim, wherein the lever assembly further comprises a side locking mechanism (514), comprising the side locking pins, intermediate the first end and the second end of the central rod (506).

8. The system of claim 7, wherein the side locking mechanism comprises two side levers (514a, 514b) each extending outwards from the central rod to a respective side locking pin.

9. The system of any preceding claim, wherein the rear locking mechanism (508) comprises a rear rod (518) joined to the central rod and extending out towards the sides of the table where the rear rod is attached to a respective rear locking pin.

10. The system of any preceding claim, wherein the actuator comprises a strap or tab (512) accessible to the user.

11. The system of any preceding claim, further comprising a spring-loaded mechanism to lock the table against pivotal movement when in the stowed position and the open position, but to permit pivotal movement between those positions.

12. The system of claim 11, wherein the spring-loaded mechanism comprises two spring-loaded pins associated with respective sides of the rear locking assembly, and corresponding holes in the pivot arms, the spring-loaded pins arranged to secure in the holes (222, 224) when the table is in the stowed or the open position.

13. The system of any preceding claims, further comprising cup holders (8) positioned relative to the table to move between a retracted position relative to the table and an extended position relative to the table.

14. A seat having a seat back (2) and a foldable table system as claimed in any preceding claim.

## Patentansprüche

1. Klapptischsystem zum Einbau in eine Sitzlehne, wobei das System Folgendes umfasst:
einen Tisch (5), der ein erstes Ende (51a) und ein zweites Ende (51b), eine Tischoberseite (51), die sich von dem ersten Ende zu dem zweiten Ende erstreckt, eine Tischunterseite (52), die sich von dem ersten Ende zu dem zweiten Ende erstreckt, und einen Hohlraum (510), der zwischen der Tischoberseite und der Unterseite definiert ist, aufweist;
eine Scharnieranordnung (6), die durch Schwenkarme (63, 64) mit dem ersten Ende des Tisches verbunden ist, um die der Tisch zwischen einer verstauten Position und einer offenen Position geschwenkt wird; und
ein Verriegelungssystem (10), das sich in dem Hohlraum befindet, wobei das Verriegelungssystem eine Hebelanordnung, seitliche Verriegelungsstifte (102), die mit einer seitlichen Verriegelungsanordnung der Hebelanordnung verbunden sind, hintere Verriegelungsstifte (104), die mit einer hinteren Verriegelungsanordnung der Hebelanordnung verbunden sind, und
einen Aktuator (512) zur Betätigung durch einen Benutzer umfasst, wobei das Verriegelungssystem in einen Standardzustand vorgespannt ist, in dem die Hebelanordnung die seitlichen Verriegelungsstifte und die hinteren Verriegelungsstifte antreibt, um sich aus dem Tisch heraus zu erstrecken, und wobei die Betätigung des Aktuators durch den Benutzer die Hebelanordnung betätigt, um die seitlichen Verriegelungsstifte und die hinteren Verriegelungsstifte in den Hohlraum zurückzuziehen; und **dadurch gekennzeichnet, dass**:
die Hebelanordnung eine zentrale Stange (506) umfasst, die sich entlang einer Mittellinie des Tisches zwischen dem ersten Ende und dem zweiten Ende erstreckt, wobei die zentrale Stange an einem ersten Ende an einem hinteren Verriegelungsmechanismus (508), der die hinteren Verriegelungsstifte umfasst, und an einem zweiten Ende an dem Aktuator (512) befestigt ist.

2. System nach Anspruch 1, wobei die Scharnieranordnung (6) eingerichtet ist, um eine Schwenkkurve oder einen Radius zu definieren, die oder der durch mehrere Schwenkpunkte definiert ist, um zu veranlassen, dass sich der Tisch in einer Schwenkkurve öffnet, wenn der Benutzer den Aktuator betätigt.

3. System nach Anspruch 1 oder 2, wobei das Verriegelungssystem eine Scharnierplatte (61) umfasst, die eingerichtet ist, um an der Sitzlehne befestigt zu werden.

4. System nach Anspruch 3, ferner umfassend eine Verstärkungsplatte (9), die eingerichtet ist, um im Gebrauch an der Scharnierplatte befestigt zu werden, mit der Sitzlehne zwischen der Scharnierplatte und der Verstärkungsplatte.

5. System nach einem der vorhergehenden Ansprüche, wobei das Verriegelungssystem zwei seitliche Verriegelungsstifte umfasst, einen an jeder Seite des Tisches.

6. System nach einem der vorhergehenden Ansprüche, wobei das Verriegelungssystem zwei hintere Verriegelungsstifte umfasst, die sich von dem ersten Ende des Tisches aus erstrecken.

7. System nach einem der vorhergehenden Ansprüche, wobei die Hebelanordnung ferner einen seitlichen Verriegelungsmechanismus (514) umfasst, der die seitlichen Verriegelungsstifte umfasst, zwischen dem ersten Ende und dem zweiten Ende der zentralen Stange (506).

8. System nach Anspruch 7, wobei der seitliche Verriegelungsmechanismus zwei Seitenhebel (514a, 514b) umfasst, die sich jeweils von der zentralen Stange nach außen zu einem entsprechenden seitlichen Verriegelungsstift erstrecken.

9. System nach einem der vorhergehenden Ansprüche, wobei der hintere Verriegelungsmechanismus (508) eine hintere Stange (518) umfasst, die mit der zentralen Stange gekoppelt ist und sich nach außen zu den Seiten des Tisches erstreckt, wo die hintere Stange an einem entsprechenden hinteren Verriegelungsstift befestigt ist.

10. System nach einem der vorhergehenden Ansprüche, wobei der Aktuator einen Riemen oder eine Lasche (512) umfasst, der oder die für den Benutzer zugänglich ist.

11. System nach einem der vorhergehenden Ansprüche, ferner umfassend einen federbelasteten Mechanismus, um den Tisch gegen eine Schwenkbewegung zu verriegeln, wenn er sich in der verstauten Position und der offenen Position befindet, aber um eine Schwenkbewegung zwischen diesen Positionen zu ermöglichen.

12. System nach Anspruch 11, wobei der federbelastete Mechanismus zwei federbelastete Stifte umfasst, die jeweiligen Seiten der hinteren Verriegelungsanordnung zugeordnet sind, und entsprechende Löcher in den Schwenkarmen, wobei die federbelasteten Stifte eingerichtet sind, um in den Löchern (222, 224) gesichert zu werden, wenn sich der Tisch in der verstauten oder der offenen Position befindet.

13. System nach einem der vorhergehenden Ansprüche, ferner umfassend Getränkehalter (8), die relativ zu dem Tisch positioniert sind, um sich zwischen einer zurückgezogenen Position relativ zu dem Tisch und einer ausgefahrenen Position relativ zu dem Tisch zu bewegen.

14. Sitz, aufweisend eine Sitzlehne (2) und ein Klapptischsystem nach einem der vorhergehenden Ansprüche.

## Revendications

1. Système de table pliable destiné à être intégré dans un dossier de siège, le système comprenant :
une table (5) présentant une première extrémité (51a) et une seconde extrémité (51b), une surface supérieure de table (51) s'étendant de la première extrémité à la seconde extrémité, une surface inférieure de table (52) s'étendant de la première extrémité à la seconde extrémité, et une cavité (510) définie entre la surface supérieure de table et la surface inférieure ;
un ensemble de charnière (6) relié par des bras de pivot (63, 64) à la première extrémité de la table autour de laquelle la table pivote entre une position repliée et une position ouverte ; et
un système de verrouillage (10) situé dans la cavité, le système de verrouillage comprenant un ensemble de levier, des goupilles de verrouillage latérales (102) reliées à un ensemble de verrouillage latéral de l'ensemble de levier, des goupilles de verrouillage arrière (104) reliées à un ensemble de verrouillage arrière de l'ensemble de levier, et un actionneur (512) destiné à être actionné par un utilisateur, le système de verrouillage est précontraint dans un état par défaut où l'ensemble de levier entraîne l'extension des goupilles de verrouillage latérales et des goupilles de verrouillage arrière hors de la table, et dans lequel l'actionnement de l'actionneur par l'utilisateur actionne l'ensemble de levier pour rétracter les goupilles de verrouillage latérales et les goupilles de verrouillage arrière dans la cavité, et **caractérisé en ce que** :
l'ensemble de levier comprend une tige centrale (506) s'étendant le long d'une ligne centrale de la table entre la première extrémité et la seconde extrémité, la tige centrale étant fixée, à une première extrémité, à un mécanisme de verrouillage arrière (508) comprenant les goupilles de verrouillage arrière, et à une seconde extrémité à l'actionneur (512).

2. Système selon la revendication 1, dans lequel l'ensemble de charnière (6) est agencé pour définir une courbe ou un rayon de pivot défini par plusieurs points de pivot, afin d'amener la table à s'ouvrir dans une courbe de pivot lorsque l'utilisateur actionne l'actionneur.

3. Système selon la revendication 1 ou 2, dans lequel le système de verrouillage comprend une plaque de charnière (61) conçue pour être fixée au dossier du siège.

4. Système selon la revendication 3, comprenant en outre une plaque de renfort (9) conçue pour être fixée à la plaque de charnière, en utilisation, avec le dossier du siège entre la plaque de charnière et la plaque de renfort.

5. Système selon l'une quelconque revendication précédente, dans lequel le système de verrouillage comprend deux goupilles de verrouillage latérales, une de chaque côté de la table.

6. Système selon l'une quelconque revendication précédente, dans lequel le système de verrouillage comprend deux goupilles de verrouillage arrière s'étendant depuis la première extrémité de la table.

7. Système selon l'une quelconque revendication précédente, dans lequel l'ensemble de levier comprend en outre un mécanisme de verrouillage latéral (514), comprenant les goupilles de verrouillage latérales, situées entre la première extrémité et la seconde extrémité de la tige centrale (506).

8. Système selon la revendication 7, dans lequel le mécanisme de verrouillage latéral comprend deux leviers latéraux (514a, 514b) s'étendant chacun vers l'extérieur à partir de la tige centrale jusqu'à une goupille de verrouillage latérale respective.

9. Système selon l'une quelconque revendication précédente, dans lequel le mécanisme de verrouillage arrière (508) comprend une tige arrière (518) jointe à la tige centrale et s'étendant vers les côtés de la table où la tige arrière est fixée à une goupille de verrouillage arrière respective.

10. Système selon l'une quelconque revendication précédente, dans lequel l'actionneur comprend une sangle ou une languette (512) accessible à l'utilisateur.

11. Système selon l'une quelconque revendication précédente, comprenant en outre un mécanisme à ressort pour verrouiller la table contre tout mouvement de pivotement lorsqu'elle est en position rangée et en position ouverte, mais pour permettre un mouvement de pivotement entre ces positions.

12. Système selon la revendication 11, dans lequel le mécanisme à ressort comprend deux goupilles à ressort associées à des côtés respectifs de l'ensemble de verrouillage arrière et à des trous correspondants dans les bras de pivot, les goupilles à ressort étant disposées pour se fixer dans les trous (222, 224) lorsque la table est en position rangée ou ouverte.

13. Système selon l'une quelconque des revendications précédentes, comprenant en outre des porte-gobelets (8) positionnés par rapport à la table pour se déplacer entre une position rétractée par rapport à la table et une position étendue par rapport à la table.

14. Siège comportant un dossier de siège (2) et un système de table pliable selon l'une quelconque revendication précédente.
